# EUROPEAN PATENT APPLICATION

(11) **EP 2 693 696 A1**
(43) Date of publication of application: **05.02.2014**
(21) Application number: 12764671.9
(22) Date of filing: 26.03.2012
(51) Int. Cl.: H04L 12/28, G06F 9/50, G06F 13/00, H04L 12/56

(54) **COMPUTER SYSTEM, AND COMMUNICATION METHOD**

(30) Priority: 31.03.2011 JP 2011080955
(71) Applicant: NEC Corporation, Tokyo 108-8001 (JP)
(72) Inventor: UENO Hiroshi, Tokyo 108-8001 (JP)
(74) Representative: Vossius & Partner
(86) International application number: PCT/JP2012/057727
(87) International publication number: WO 2012/133290

(57) **Abstract**

In a computer system according to the present invention, by using an ARP response packet in which a MAC address of a physical server is set as a transmission source MAC address, the MAC address of the physical server corresponding to a target VIP address included in an ARP request packet from a terminal device, a controller executes a proxy response to the ARP request packet to notify the terminal device of the MAC address of the physical server which is the access destination of the terminal device. In addition, the controller sets a flow entry to the switch, the flow entry regulating that a reception packet, which is transmitted from the terminal device and in which the MAC address is set as a destination MAC address, is made to be forwarded to a communication route to the physical server. Accordingly, a server which is an access destination of a terminal device can be arbitrarily set while increase of costs is suppressed in a high-speed network environment.

## Description

### TECHNICAL FIELD

The present invention relates to a computer system and a communication method in a computer system, and more particularly relates to a server load balancing method in a computer system.

### BACKGROUND ART

In a large-scale system established in a data center and so on, a server load balancing device is used for securing scalability. In the server load balancing device, processing is performed, which determines a destination server as a real distribution destination for a Virtual Internet Protocol (hereinafter referred to as a VIP) address and changes a packet header such that the packet is transmitted to the destination. For example, the load balancing device performs MAT (Media Access Control Translation) processing which rewrites only a MAC address of the destination without changing a VIP address of the destination, or performs NAT (Network Address Translation) processing which rewrites an IP address of the packet into an IP address of the real destination.

For example, Japanese patent publication No. JP 2008-60747 A describes a load balancing processing method by MAT processing for realizing load balancing of Layer 2 (see a patent literature 1). In the patent literature 1, the load balancing device executes a proxy ARP response to an ARP packet, learns a MAC address of a server and converts a MAC address of the load balancing device included in the packet into the MAC address of the server in response to a destination IP address. Accordingly, an access destination server accessed from the network can be changed by the load balancing device in an integrated fashion and an access destination from the server to the network can be changed by the load balancing device in an integrated fashion.

Meanwhile, with speed-up of a network, 10 Gbps has been used in a network interface of a host, and a switch having a lot of 10-Gbps ports is commonly used as a network switch.

However, in a high-speed processing environment, since speed-up of a CAM (Content Addressable Memory) for header retrieval is difficult, speed-up of the MAT processing and the NAT processing is also difficult. For speed-up of the MAT processing, for example, a dedicated ASIC which is used for processing a packet header may be considered. In this case, the device cost might be increased.

Generally, a L2 switch executes forwarding based on only a destination MAC address having a fixed length and does not executes a header conversion. Since a L2 switch is indispensible for establishing a network and the product cost is decreased due to economy of scale, it is desired that a simple function such as a L2 switch is used in the high-speed network environment.

For example, Japanese patent publication No. JP 2009-253578 A describes a load balancing device which executes load balancing for a server by using a L2 switch (see a patent literature 2). The load balancing device described in the patent literature 2 forwards an ARP response from a server to a client, the server being selected from multiple servers based on connection situations between respective servers and the client, and each of the multiple servers performing the ARP response to the ARP request from the client.

In the patent literature 2, since the client can directly specify a MAC address of a real server and transmit a packet, MAC address translation processing, which is an inhibitory factor for speed-up of a network, is not required. However, in the method of the patent literature 2, for an ARP relay between the client and the server, a packet processing device should be installed in the network. Thus, the packet processing device is expected to be a processing bottleneck in the high-speed processing environment.

Meanwhile, the OpenFlow Consortium proposes the technique (the OpenFlow) in which a forwarding operation and so on of each switch is controlled by an external controller in an integrated fashion in a computer network (see a non-patent literature 1). An example of a system with respect to the OpenFlow is described in "OpenFlow: Enabling Innovation in Campus Networks" by Nick McKeown and 7 other authors (see a non-patent literature 2).

In the OpenFlow, communication is treated as end-to-end flow and routing is executed on a flow unit. An OpenFlow switch functioning as a forwarding node operates according to a flow table which is added / updated by an OpenFlow controller based on the OpenFlow protocol. In the flow table, a combination of a packet matching rule (hereinafter referred to as a rule) and an action is registered as a flow entry, the rule specifying a packet, and the action specifying an operation for a reception packet such as "outputting to a specific port", "discarding" and "rewriting a header". When header information of the reception packet matches the rule of the flow entry registered in the OpenFlow switch, the OpenFlow switch executes processing of the reception packet according to the action described in the flow entry. Or, when there is no rule (flow entry) matching header information of the reception packet, the OpenFlow switch notifies the OpenFlow controller of the packet (hereinafter referred to as a first packet).

When receiving the first packet, the OpenFlow controller determines a route based on information such as a transmission source host and a transmission destination host included in the packet and instructs all OpenFlow switches on the route to set a flow entry specifying a forwarding destination of the packet (issues a flow table updatinginstructions). The OpenFlow switches on the route update their flow tables managed by themselves in response to the flow table updating instructions. After that, the OpenFlow switch starts forwarding of the packet based on the updated flow table, and the packet reaches the destination host through the route determined by the OpenFlow controller.

In a network using the OpenFlow protocol, a controller (a control system) and a switch (a packet forwarding system) are separated. Therefore, a feature expansion to the existing switch operation is easily realized. However, since the existing OpenFlow switch executes the switch processing involving the header reference and the header conversion, a dedicated high-speed device is required as similarly described above to achieve the speed-up of the network. This might lead to increase of costs.

### CITATION LIST

### Patent Literature

[PTL 1] JP 2008-60747 A
[PTL 2] JP 2009-253578 A

### Non Patent Literature

[NPL 1] "OpenFlow Switch Specification Version 1.0.0 (Wire Protocol 0x01)", December 31, 2009
[NPL 2] Nick McKeown, and other 7 authors, "OpenFlow: Enabling Innovation in Campus Networks", [online], [Searching on 22 Oct., 2010], Internet, <URL:http://www.openflowswitch.org//documents/openflow -wp-latest.pdf>.

### SUMMARY OF INVENTION

According to the above, an object of the present invention is to arbitrarily set a server which is an access destination of a terminal device while suppressing increase of costs in a high-speed network environment.

Another object of the present invention is to suppress increase of costs of a computer system which achieves load balancing in the high-speed network environment.

Still another object of the present invention is to achieve server load balancing processing with high scalability without using an expensive network device in the high-speed network environment.

Yet still another object of the present invention is to achieve load balancing of Layer 4 in which address conversion is required in the high-speed network environment.

A computer system according to an aspect of the present invention includes: a controller; and a switch configured to perform, on a reception packet complying with a flow entry set by the controller, a relay operation specified by the flow entry. The controller selects, with reference to a table in which a VIP (Virtual Internet Protocol) address and a physical server are related and recorded, a physical server which corresponds to a target VIP address included in an ARP request packet from a terminal device as a physical server which is an access destination of the terminal device. In addition, the controller executes a proxy response to the ARP request packet by using an ARP response packet in which a MAC (Media Access Control) address of the physical server is set as a transmission source MAC address, to notify the terminal device of the MAC address of the physical server which is the access destination of the terminal device. Furthermore, the controller sets a flow entry to the switch, the flow entry specifying that a reception packet, which is transmitted from the terminal device and in which the MAC address is set as a destination MAC address, is made to be forwarded to a communication route to the physical server.

A computer system according to another aspect of the present invention includes: a controller; a switch configured to perform, on a reception packet complying with a flow entry set by the controller, a relay operation specified by the flow entry; and a switching device. The switch forwards, based on a first flow entry set by the controller, a packet in which a first MAC address of a first server is set as a destination MAC address to a communication route to the first server. The controller sets a second flow entry to the switch by replacing the first flow entry, the second flow entry specifying that a packet, in which a first MAC address of the first server is set as a destination MAC address, is made to be forwarded to the switching device. The switch forwards, based on the second flow entry, the packet in which the first MAC address is set as the destination MAC address to the switching device. The switching device changes the destination MAC address of the reception packet from the switch from the first MAC address into a second MAC address of a second server different from the first server and forwards a communication route to the second server.

The above-mentioned controller is preferably realized by executing a communication control program by a computer.

The above-mentioned switching device is preferably realized by executing a communication control program by a computer.

A communication method according to another aspect of the present invention which is executed by a computer system, the computer system including: a switch configured to perform, on a reception packet complying with a flow entry set by a controller, a relay operation specified by the flow entry. The communication method according to the present invention includes: the controller selecting, with reference to a table in which a VIP (Virtual Internet Protocol) address and a physical server are related and recorded, a physical server which corresponds to a target VIP address included in anARP request packet from a terminal device as a physical server which is an access destination of the terminal device; the controller executing a proxy response to the ARP request packet by using an ARP response packet in which a MAC (Media Access Control) address of the physical server is set as a transmission source MAC address, to notify the terminal device of the MAC address of the physical server which is the access destination of the terminal device; and the controller setting a flow entry to the switch, the flow entry specifying that a reception packet, which is transmitted from the terminal device and in which the MAC address is set as a destination MAC address, is made to be forwarded to a communication route to the physical server.

A communication method according to another aspect of the present invention which is executed by a computer system, the computer system including: a switch configured to perform, on a reception packet complying with a flow entry set by a controller, a relay operation specified by the flow entry. The communication method according to the present invention includes: the switch forwarding, based on a first flow entry set by the controller, a packet in which a first MAC address of a first server is set as a destination MAC address to a communication route to the first server; the controller setting a second flow entry to the switch by replacing the first flow entry, the second flow entry specifying that a packet, in which a first MAC address of the first server is set as a destination MAC address, is made to be forwarded to the switching device; the switch forwarding, based on the second flow entry, the packet in which the first MAC address is set as the destination MAC address to the switching device; and the switching device changing the destination MAC address of the reception packet from the switch from the first MAC address into a second MAC address of a second server different from the first server and forwarding a communication route to the second server.

According to the present invention, a server which is an access destination of a terminal device can be arbitrarily set while increase of costs is suppressed in a high-speed network environment.

In addition, server load balancing processing can be achieved while increase of costs is suppressed in the high-speed network environment.

Furthermore, server load balancing processing with high scalability can be achieved without using an expensive network device in the high-speed network environment.

Moreover, load balancing of Layer 4 in which address conversion is required can be achieved in the high-speed network environment.

### BRIEF DESCRIPTION OF DRAWINGS

The above and other objects, advantages and features of the present invention will be more apparent from the following description of certain preferred exemplary embodiments taken in conjunction with the accompanying drawings, in which:
Fig. 1 is a diagram showing a configuration of a computer system of a first exemplary embodiment according to the present invention;
Fig. 2 is a diagram showing an example of a configuration of a host terminal information table according to the present invention;
Fig. 3 is a diagram showing an example of a configuration of a load information table according to the present invention;
Fig. 4 is a diagram showing an example of a configuration of an assignment information table according to the present invention;
Fig. 5 is a diagram showing an example of a configuration of an OpenFlow switch according to the present invention;
Fig. 6 is a diagram showing an example of a configuration of a switching device according to the present invention;
Fig. 7 is a diagram showing an example of a configuration of a switching information table;
Fig. 8A is a sequence diagram showing an example of a load balancing operation in a case of executing an ARP proxy response;
Fig. 8B is a sequence diagram showing an example of a load balancing operation in a case of executing an ARP proxy response;
Fig. 9 is a flowchart showing an example of an operation of ARP response processing in a controller according to the present invention;
Fig. 10A is a sequence diagram showing an operation of the computer system in a case of not executing an ARP proxy response in the controller;
Fig. 10B is a sequence diagram showing an operation of the computer system in a case of not executing an ARP proxy response in the controller;
Fig. 11 is a sequence diagram showing an example of a destination server switching operation in the computer system according to the present invention;
Fig. 12 is a flowchart showing an example of server deleting processing (destination server switching processing) in the controller 20 according to the present invention;
Fig. 13 is a sequence diagram showing an example of an operation of switching the destination server while retaining a session in a computer device according to the present invention;
Fig. 14 is a flowchart showing an example of an operation of the switching processing in the controller according to the present invention;
Fig. 15 is a flowchart showing an example of an operation of packet control processing in the switching device according to the present invention; and
Fig. 16 is a flowchart showing a switching operation based on expiring of a flow entry in the switching device 40 according to the present invention.

### DESCRIPTION OF EXEMPLARY EMBODIMENTS

Exemplary embodiments of the present invention will be described below referring to the accompanying drawings. In the drawings, same or similar reference numerals indicate same, similar or equivalent configuration elements. In addition, when there are multiple similar configurations, a serial number is added to the reference numeral in each configuration for explanation, and when there is no need for distinguishing between the multiple configurations, a serial number is not added to the reference numeral in each configuration for explanation.

### (Outline)

A computer system according to the present invention performs establishing a communication route and forwarding control of packet data by using the OpenFlow technique. In the computer system according to the present invention, an OpenFlow controller (hereinafter referred to as a controller) determines a physical server as an access destination of a terminal device based on a load situation of each of multiple physical servers. At this time, the controller collects an ARP request received from the terminal device from an OpenFlow switch (hereinafter referred to as a switch) and executes a proxy response to the ARP request to notify the terminal device of a MAC address of the physical server as the access destination of the terminal device. In addition, the controller sets a flow entry in OpenFlow switches, the flow entry being for relaying a packet to the physical server from the terminal device, and the OpenFlow switches being on a route in which the terminal device and the physical server are end points. In this way, since the system according to the present invention determines the physical server as the access destination while using the Layer 2 switches, load balancing can be realized with low costs in the high-speed network.

### (Configuration of computer system)

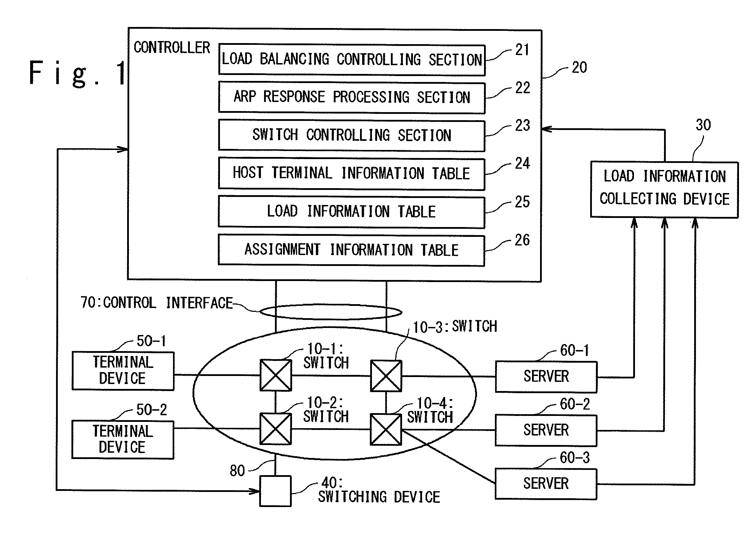

An example of the configuration of the computer system according to the present invention will be described with reference to Figs. 1 to 7. Fig. 1 is a diagram showing an example of the configuration of the computer system according to the present invention.

With reference to Fig. 1, the computer system according to the present invention includes: a plurality of switches 10-1 to 10-4, a controller 20, a load information collecting device 30, a switching device 40, a plurality of terminal devices 50-1 to 50-2 and a plurality of servers 60-1 to 60-3. Here, the terminal devices 50-1 to 50-2 and the servers 60-1 to 60-3 are exemplified by computer devices which are connected to a same Ethernet LAN.

The controller 20 is connected to the plurality of switches 10-1 to 10-4 respectively through a control interface 70 of a secure network. The controller 20 controls communication between the plurality of terminal devices 50-1 to 50-2 and the plurality of servers 60-1 to 60-3 through some of the plurality of switches 10-1 to 10-4 by setting a flow entry in each of the plurality of switches 10-1 to 10-4 based on the OpenFlow protocol.

In detail, the controller 20 controls communication route establishment and packet forwarding processing for packet forwarding in the system by using the OpenFlow technique. Here, the OpenFlow technique (in detail, see the non-patent literature 1) is the technique that the controller 20 sets route information in units of multilayer and flow in the switches 10 on the communication route and performs routing and node control based on the routing policy (flow entry: flow + action). Accordingly, by separating the routing function from a router and a switch, the controller can perform concentrated control to achieve optimum routing and traffic management. The switch 10 to which the OpenFlow technique is applied treats communication as the flow of END2END, and does not treat communication in units of packet and flame like the conventional router and switch.

With reference to Fig. 1, the configuration of the controller 20 according to the present invention will be described in detail. The controller 20 is preferably realized by a computer including a CPU and a memory device. In the controller 20, respective functions of a load balancing controlling section 21, an ARP response processing section 22 and a switch controlling section 23 shown in Fig. 1 can be realized by the CPU executing a program stored in the memory device (not shown in the figure). In addition, the controller 20 includes a host terminal information table 24, a load information table 25 and an assignment information table 26 recorded in the memory device (not shown in the figure).

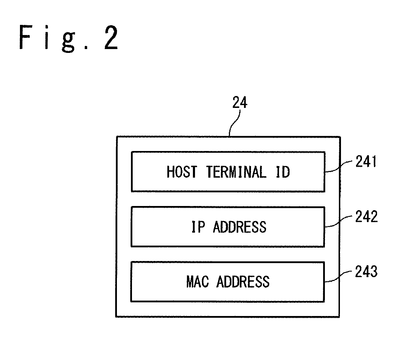

Fig. 2 is a diagram showing an example of a configuration of the host terminal information table 24. With reference to Fig. 2, in the host terminal information table 24, a host terminal ID 241 specifying the terminal device 50 and the server 60 is recorded while being related to an IP address 242 and a MAC address 243 set to the terminal device 50 and the server 60. That is, in the host terminal information table 24, the IP address and the MAC address set to every terminal device 50 or server 60 are recorded.

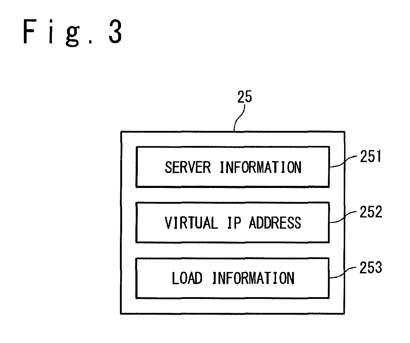

The load balancing control section 21 collects load information from each of the servers 60-1 to 60-3 through the load information collecting device 30, records the information in the load information table 25 and manages the information. Fig. 3 is a diagram showing an example of a configuration of the load information table 25. In the load information table 25, server information 251 (for example, the host terminal ID of the server 60) specifying the server 60 is recorded while being related to a virtual IP address 252 (hereinafter referred to as a VIP 252) set to the server and load information 253. The load information 253 indicates a load of an application specified by the VIP 252 and a load (a server load) of the server which is assigned to the VIP 252. In addition, the server information 251 is related to the host terminal ID 241 in the host terminal information table 24. Accordingly, the load balancing controlling section 21 can manage the relationship between the VIP address and the real address (the IP address 242 and the MAC address 243) of the server 60 and the load information 253 of the server 60 by referring to the load information table 25.

The load information 253 is collected from each server at regular intervals or at arbitrary time by the load information collecting device 30, and is transmitted to the load balancing controlling section 21 with the server information 251 and the VIP 252. For example, the load information collecting device 30 collects the load information 253 by using a method of collecting an application load through an API such as a SNMP (Simple Network Management Protocol) and a CLI (Command Line User Interface), by using a method of collecting information from a load collecting agent included in the server, or the like. The load balancing controlling section 21 acquires the load information 253 from the load information collecting device 30 at regular intervals or at arbitrary time and updates the load information table 25. At this time, the load balancing controlling section 21 actively or passively acquires the load information 253 from the load information collecting device 30.

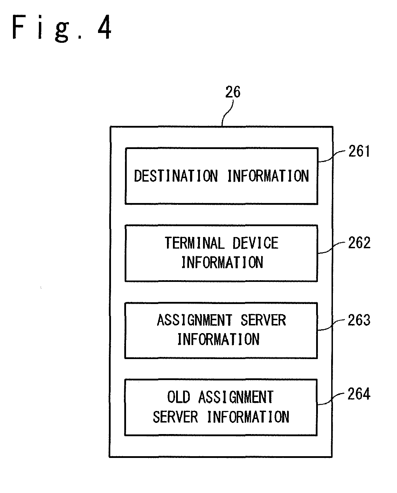

In addition, the load balancing controlling section 21 records information in the assignment information table 26 and manages the information, the information relating the terminal device 50 to the server 60 which is assigned as an access destination of the terminal device 50. Fig. 4 is a diagram showing an example of a configuration of the assignment information table 26. In the assignment table 26, destination information 261, terminal device information 262, assignment server information 263 are related and recorded. The destination information 261 is information specifying an application and a VIP server of an access destination of the terminal device 50, and it is, for example, a VIP address set to a virtual machine. Or, the destination information 261 may be an IP address specifying the server of an access destination of the terminal device 50. The terminal device information 262 is information specifying the terminal device 50, and it is, for example, a host terminal ID identifying the terminal device 50. The assignment server information 263 is information specifying the server 60 (the physical server 60) currently assigned as the access destination of the terminal device 50, and it is, for example, a host terminal ID identifying the server 60. By relating the assignment server information 263 to the host terminal ID 241 of the host terminal information table 24, the MAC address of the server 60 assigned as the access destination of the terminal device 50 can be specified. Old assignment server information 264 is information specifying the server 60 (the physical server 60) assigned as the access destination of the terminal device 50 before "switching the access destination". When changing the access destination server of the terminal device 50, the load balancing controlling section 21 records the contents of the assignment server information 263 as the old assignment server information 264 and updates the assignment server information 263 using a MAC address of a server newly assigned as a destination of the terminal device 50.

The ARP response processing section 22 executes a proxy ARP response to an ARP request packet transmitted from the switch 10 through the control interface 70. In detail, the ARP response processing section 22 transmits an ARP response packet to the terminal 50 of the request source, the ARP response packet having a MAC address of a host terminal (for example, the server 60) as a transmission source, the host terminal corresponding to a target address included in the ARP request packet. At this time, when the target address is the IP address of the server 60, with reference to the host terminal information table 24, the ARP response processing section 22 specifies the server 60, to which the IP address 242 coinciding with the target address is set, as the ARP request destination and sets the MAC address 243 of the server 60 as a transmission source MAC address of the ARP response packet. On the other hand, when the target address is the VIP address, with reference to the load information table 25, the ARP response processing section 22 specifies the server 60 of the ARP request destination from the server information 251 related to the VIP 252 coinciding with the target address and sets the MAC address 243 corresponding to the host terminal ID 24 related to the server information 251 in the host terminal information table 24 as a transmission source MAC address of the ARP response packet.

Due to the above configuration, the controller 20 according to the present invention manages the MAC address and the VIP address set to every server 60 and executes the proxy response using the ARP response packet in which the MAC address of the server 60 corresponding to the target address of the ARP request is set as the transmission source, instead of the server 60.

The switch controlling section 23 sets and deletes a flow entry (rule + action) with respect to the switch 10 according to the OpenFlow protocol. Consequently, the switch 10 performs an action (for example, relay and discard of packet data) corresponding to a rule depending on header information of a reception packet.

In the rule set to the flow entry, for example, combinations of addresses and identifiers from Layer 1 to Layer 4 of the OSI (Open Systems Interconnection) reference model included in header information of packet data of TCP/IP (Transmission Control Protocol/Internet Protocol) are regulated. For example, a combination of a physical port of Layer 1, a MAC address and a VLAN tag (a VLAN id) of Layer 2, an IP address of Layer 3 and a port number of Layer 4 is set as the rule. Here, a priority order (a VLAN Priority) may be added to the VLAN tag.

Here, the addresses and identifiers such as the port number set as the rule by the switch controlling section 23 may be set within a predetermined range. In addition, preferably, an address of a destination and an address of a transmission source are separately set as the rule. For example, a range of a MAC destination address, a range of a destination port number specifying an application of an access destination and a range of a transmission source port number specifying an application of an access source are set as the rule. In addition, an identifier specifying a data forwarding protocol may be set as the rule.

In the action set to the flow entry, for example, a method of processing packet data of TCP/IP is regulated. For example, information indicating whether or not reception packet data is relayed and a transmission destination in the case of the relay are set as the action. In addition, as the action, information instructing copying and discarding of the packet data may be set.

The switch controlling section 23 sets the flow entry to the switch 10 according to the notification of the first packet and the notification of the ARP request packet from the switch 10. Since the setting of the communication route and the setting and managing of the flow entry of the switch controlling section 23 are executed based on the OpenFlow protocol described in the non-patent literature 1, the detail description is omitted here. Operations which are not regulated in the protocol will be described later.

The switch 10 determines a processing method (an action) of a reception packet based on the flow entry set (updated) by the controller 20. The action for the reception packet is exemplified by forwarding to another switch 10 and discarding.

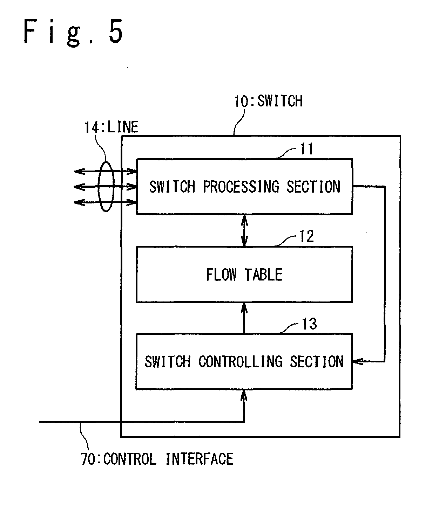

Fig. 5 is a diagram showing an example of a configuration of the switch 10 according to the present invention. With reference to Fig. 5, the switch 10 includes a switch processing section 11, a flow table 12 and a switch controlling section 13. The switch processing section 11 houses lines 14-1 to 14-N and realizes a switching function with respect to packets forwarded through housed lines. The switch controlling section 13 is connected to the controller 20 through the control interface 70 and controls the setting of the flow entry to the flow table 12 in response to the instructions from the controller 20. The switch processing section 11 determines processing for the reception packet based on the flow entry. In detail, when the rule complying with the header information of the reception packet is set in the flow table 12, the switch processing section 11 executes the action regulated in the flow entry including the rule. On the other hand, when the rule complying with the header information of the reception packet is not set in the flow table 12, the switch processing section 11 notifies the switch controlling section 13 of the packet data as the first packet. The switch controlling section 13 transmits the first packet to the controller 20 through the control interface 70.

In addition, when the reception packet is an ARP request, the switch processing section 11 notifies the switch controlling section 13 of the reception packet. The switch controlling section 13 transmits the notified reception packet (the ARP request packet) to the controller 20 through the control interface 70.

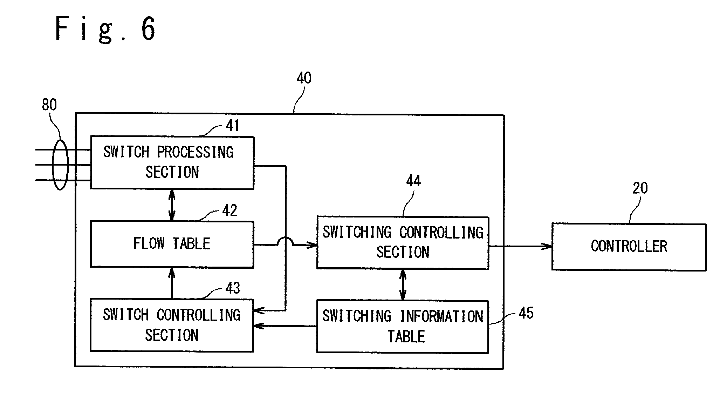

The switching device 40 is connected to each of the plurality of switches 10-1 to 10-4 through the control interface 70 as the secure network. The switching device 40 can be realized by a switch or a server which can process traffic with granularity of Layer 4 such as TCP and UDP. Fig. 6 is a diagram showing an example of a configuration of the switching device 40 according to the present invention. The switching device 40 is preferably realized by a computer including a CPU and a memory device. In the switching device 40, respective functions of a switch processing section 41, a switch controlling section 43 and a switching controlling section 44 shown in Fig. 6 are realized by the CPU executing a computer program stored in the memory device, not shown here. In the memory device (not shown) of the switching device 40, a flow table 42 and a switching information table 45 are recorded.

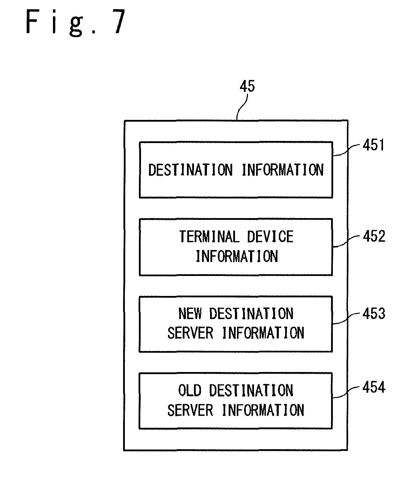

The switch processing section 41 is connected to the switch network composed of the plurality of switches 10-1 to 10-4 and realizes a switch function for a packet forwarded through the control interface 80. The switch controlling section 43 controls the setting of the flow entry to the flow table 42 based on the switching information table 45. The switching information table 45 is recorded and managed by the switching controlling section 44. Fig. 7 is a diagram showing an example of a configuration of the switching information table 45. With reference to Fig. 7, the switching controlling section 44 relates and records destination information 451, terminal device information 452, new destination server information 453 and old destination server information 454 transmitted from the controller 20. The destination information 451 is information specifying an application and a virtual server of the access destination of the terminal device 50 and is, for example, a VIP address set to a VIP machine. The terminal device information 452 is information specifying the terminal device 50 and is, for example, the MAC address of the terminal device 50. The new destination server information 453 is information specifying the server 60 (the physical server) assigned as the access destination of the terminal device 50 and is, for example, the MAC address of the server 60. The old destination server information 454 is information specifying the server 60 (the physical server) assigned as the access destination of the terminal device 50 before "switching the access destination" and is, for example, the MAC address of the server 60.

The switch processing section 41 analyzes a reception packet and notifies the switch controlling section 43 of the analysis result. The switch controlling section 43 changes the action of the flow entry set in the flow table 42 based on the analysis result. For example, the switch processing section 41 judges whether or not the reception packet is a TCP packet including a SYN flag and whether or not the flow entry complying with the reception packet exists and notifies the switch controlling section 43 of the judgment result. When the reception packet is the TCP packet including the SYN flag and when the reception packet is not the TCP packet, with reference to the switching information table 45, the switch controlling section 43 changes the destination regulated by the action of the flow entry complying with the reception packet into the MAC address indicated by the new destination server information 453. Or, when the reception packet is not the TCP packet including a SYN flag and the flow entry complying with the packet is set, the switch controlling section 43 executes the action regulated in the flow entry.

Due to the above configuration, in the computer system according to the present invention, by the controller 20 controlling the change of the access destination of the terminal device based on the loads of the servers in an integrated fashion and using the switching device 40, the server 60 of the access destination of the terminal device 50 can be switched to another server while the session is retained.

### (Operation)

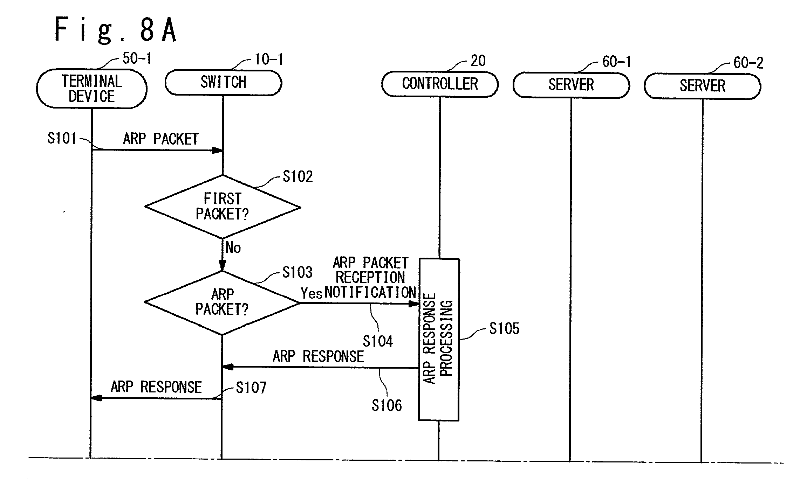

With reference to Figs. 8A to 16, an operation of the computer system according to the present invention will be described in detail. Below, five operations will be described, the five operation being (1) Load balancing operation in the case of executing ARP proxy response; (2) Operation in the case of not executing ARP proxy response; (3) Destination server switching operation; (4) Destination server switching operation while session is retained; and (5) Switching completion operation according to deletion of flow entry.

### (1) Load balancing operation in the case of executing ARP proxy response

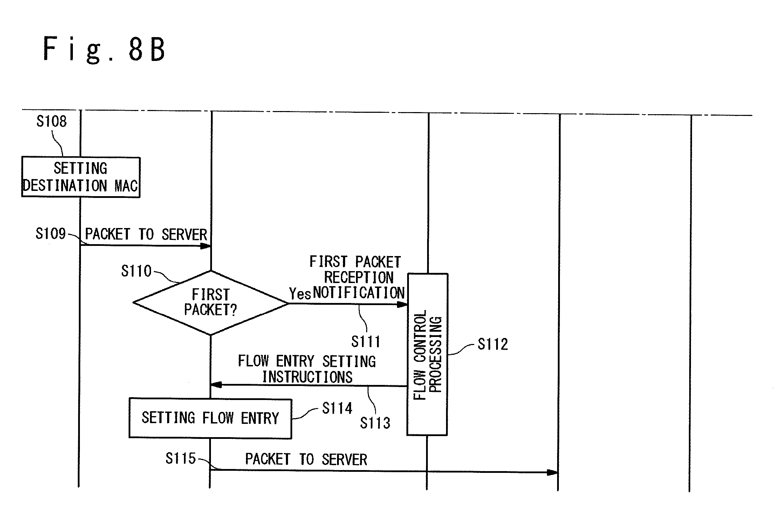

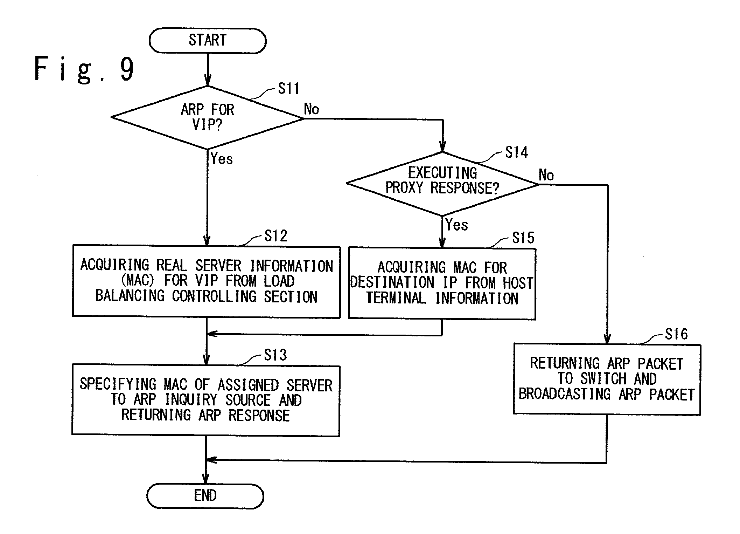

With reference to Figs. 8A, 8B and 9, a load balancing operation in the case of executing an ARP proxy response of the computer system according to the present invention. Here, the description will be made in which the terminal device 50-1 starts communication to the VIP address to which the servers 60-1 and 60-2 are assigned. Figs. 8A and 8B are sequence diagrams showing an example of the load balancing operation in the case of executing the ARP proxy response. Fig. 9 is a flowchart showing an example of an operation of the ARP response processing in the controller20 according to the present invention.

In advance of this operation, the controller 20 describes a flow entry into the flow table 12 of the switch 10-1, the flow entry being that when receiving an ARP packet, the switch 10-1 transmits it to the controller. For example, the flow entry is set to the switch 10-1, the flow entry including that a matching condition that an interface (a port number) connected to the terminal device 50-1 and an Ethernet type field of 0x0806 as information indicating an ARP request is the rule, and forwarding to the controller is the action.

First, the terminal device 50-1 broadcasts an ARP request packet in order to acquire a MAC address which is an address of Layer 2 with respect to a VIP address of an access destination (step S101). The ARP request packet transmitted here indicates that a destination is a broadcast address, a transmission source is the MAC address of the terminal device 50-1 and the payload includes the VIP address as the target to be solved.

When the switch 10-1 adjacent to the terminal device 50-1 receives the packet from the terminal device 50-1, the switch 10-1 judges whether or not a flow entry complying with (matched with) the packet is set by retrieving the flow entry with reference to the flow table 12 (step S102). Here, since the reception packet is the ARP request packet through an interface connected to the terminal device 50-1, the switch 10-1 executes the action of "notify the controller 20 of the received ARP request packet" regulated in the flow entry complying with the packet (steps S102: No, S103: Yes and S104). The controller 20 executes ARP response processing with respect to the ARP request packet notified from the switch 10-1 (step S105).

With reference to Fig. 9, the ARP response processing in the step S105 will be described in detail. The ARP response processing section 22 of the controller 20 judges whether or not the request is the ARP request for a VIP address with reference to the target address of the notified ARP request packet (step S11). Here, since the ARP request packet is the packet for the VIP address, the ARP response processing section 22 acquires real server information (a MAC address) with respect to the VIP address from the load balancing controlling section 21 (steps S11: Yes, S12).

In detail, with reference to the load information table 25, the load balancing controlling section 21 specifies the server (the server information 251) to which the destination VIP address of the reception packet is assigned, extracts the MAC address 243 with respect to the specified server information 251 from the host terminal information table 24 and gives the extracted MAC address 243 to the ARP response processing section 22. At that time, when there are multiple servers to which the destination VIP address is assigned, the load balancing controlling section 21 determines the server to be assigned as the access destination based on the load information 253 with respect to each of the multiple servers (the server information 251). For example, the load balancing controlling section 21 assigns the server 60-1 whose load is smallest in the multiple servers, to which the destination VIP address is assigned, as the access destination of the terminal device 50-1 and gives the MAC address of the server to the ARP response processing section 22. When assigning the server to the target VIP address of the ARP request packet, the load balancing controlling section 21 records the assignment result in the assignment information table 26. In detail, the load balancing controlling section 21 sets the target VIP address of the ARP request packet as the destination information 261, sets the host terminal ID corresponding to the transmission source address (e.g. the transmission source MAC address) of the ARP request packet as the terminal information 262, sets the host terminal ID of the server assigned to the VIP address as the assignment server information 263, relates them to each other and records them in the assignment information table 26.

Or, when the server assigned to the VIP address based on the load information 253 is preliminary recorded in the assignment information table 26, the load balancing controlling section 21 extracts the assignment server information 263 corresponding to the target VIP address from the assignment information table 26, and gives the MAC address 243 corresponding to the assignment server information 263 to the ARP response processing section 22. Incidentally, in the step S12, when referring to the assignment information table 26 and finding that the server assigned to the VIP address is not preliminary recorded, the load balancing controlling section 21 preferably determines the server to be assigned to the target VIP address based on the load information table 25.

On the other hand, in the step S11, when the reception packet is not the ARP request packet with respect to the VIP address (for example, when the reception packet is the ARP request packet with respect to the destination IP address), the ARP response processing section 22 judges whether or not the proxy response is executed (step S14). For example, information in which the terminal devices connected to the network is preliminary set in the controller 20, to avoid useless traffic, the ARP response processing section 22 returns the response by proxy without flooding (broadcasting) the received ARP request packet. In the step S14, the ARP response processing section 22 judges whether or not the execution of the proxy response to the ARP request from a predetermined terminal device is set. If it is set, the ARP response processing section 22 executes the proxy response based on the setting (steps S14: Yes, S15, S13). Here, when executing the proxy response to the ARP request, the ARP response processing section 22 acquires the MAC address 243 corresponding to the destination IP address of the first packet from the host terminal information table 24 (step S15). When the server is assigned to the target IP address of the ARP request packet, the load balancing controlling section 21 preferably records this assignment result in the assignment information table 26. In detail, the load balancing controlling section 21 sets the target IP address of the ARP request packet as the destination information 261, sets the host terminal ID corresponding to the transmission source address (e.g. the transmission source MAC address) of the ARP request packet as the terminal information 262, sets the host terminal ID of the server assigned to the IP address as the assignment server information 263, relates them to each other and records them in the assignment information table 26.

The ARP response processing section 22 transmits an ARP response packet to the terminal device 50-1 of the request source, the ARP response packet being the packet in which the MAC address acquired from the load balancing controlling section 21 or the host terminal information table 24 is set as the transmission source MAC address and the transmission source MAC address of the ARP request packet is set as the destination MAC address (step S13, step S106 in Fig. 8B). Here, the ARP response packet is transmitted, the ARP response packet being the packet in which the MAC address of the server 60-1 is set as the transmission source MAC address and the MAC address of the terminal 50-1 is set as the destination MAC address.

With reference to Figs. 8A and 8B, the ARP response packet transmitted from the controller 20 is transmitted to the switch 10-1 of the notification source of the ARP request packet through the control interface 70 (step S106). At this moment, before transmitting the ARP response packet, the controller 20 sets the flow entry for forwarding the ARP response packet to the terminal device 50-1 to the switch 10-1 and then the controller 20 transmits the ARP response packet to the switch 10-1. The switch 10-1 transmits the received ARP response packet to the terminal device 50-1 according to the flow table (step S107).

The terminal device 50-1 sets the transmission source MAC address of the received ARP response packet as the MAC address assigned to the destination VIP address in the ARP table (step S108). Here, the MAC address of the server 60-1 of the destination VIP address is assigned. At the step S108 or later, the terminal device 50-1 sets the MAC address of the server 60-1 as the destination MAC address of the packet in which the destination is the VIP address and then executes the communication in which the destination is the VIP address (step S109 to S115). In detail, the terminal device 50-1 transmits the packet in which the destination is the MAC address of the server 60-1 as the packet in which the destination is the VIP address (step S109). The switch 10-1 judges whether or not the reception packet complies with the entry in the flow table. If the reception packet does not comply with the entry, the switch 10-1 notifies the controller 20 of the packet as the first packet (steps S110: Yes, S111). The controller 20 analyzes the notified first packet and executes flow control processing (step S112). In detail, the controller 20 specifies the terminal 50-1 and the server 60-1 which are end points of a communication route based on the transmission source MAC address and the destination MAC address of the first packet and calculates the communication route which connects between the end points. Next, the controller 20 determines a flow entry for forwarding the packet through the communication route. The controller 20 instructs each of the switches on the communication route to set the flow entry (step S113). Based on the instructions of the setting of the flow entry, the switch 10-1 sets the flow entry in its own flow table and forwards the packet received at the step S109 to the forwarding destination according to the flow entry (step s115). For example, the flow entry is set in the switch 10-1, the flow entry regulating that "forward to the server 60-1 the packet in which the MAC address of the terminal device 50-1 is set as the transmission source address and the MAC address of the server 60-1 is set as the transmission source address as the packet in which the destination is the VIP address."

At the step S114 or later, the packet whose destination is the VIP address is forwarded to the server 60-1 through the switch 10-1, the packet being that the MAC address of the terminal device 50-1 is set as the transmission source address and the MAC address of the server 60-1 is set as the transmission source address. Incidentally, in the example shown in Figs. 8A and 8B, the packet is forwarded from the switch 10-1 to the server 60-1. However, it goes without saying that if another switch 10 on the communication route up to the server 60-1 is regulated as the forwarding destination in the flow entry, the packet is forwarded to the server 60-1 through the other switch 10.

In addition, as the rule of the flow entry set in the switch 10, it is enough to regulate at least the transmission source MAC address and the destination MAC address, and it is not necessary to regulate the destination IP address. According to this, the packet can be forwarded in the usual L2 switch network and the communication with the server 60-1 can be executed by using the L2 switch function included in the switch 10. In this case, since the switch 10 performs the L2 forwarding, the packet is forwarded based on only the destination address. That is, since the rewriting of the packet header is not performed in the network, the system can be established by using the high speed and low cost switches.

As described above, in the computer system according to the present invention, the controller 20 captures the ARP request to the VIP address executed by the terminal device 50 and the ARP proxy response is executed in which the server (of the MAC address) assigned to the VIP address is set as the transmission source. In addition, the controller 20 sets to the switch 10 the flow entry in which the reception packet is forwarded to the MAC address assigned to the VIP address. Accordingly, the switch 10 can forward the reception packet to the destination server (the MAC address) corresponding to the VIP address without converting the MAC address. Consequently, according to the present invention, in the high speed and low cost L2 network, the access destination of the terminal device 50 can be arbitrary set by the controller 20. Furthermore, since the controller 20 according to the present invention changes the server of the access destination based on the server load, in the high speed and low cost L2 network, the server load balancing can be realized.

### (2) Operation in the case of not executing ARP proxy response

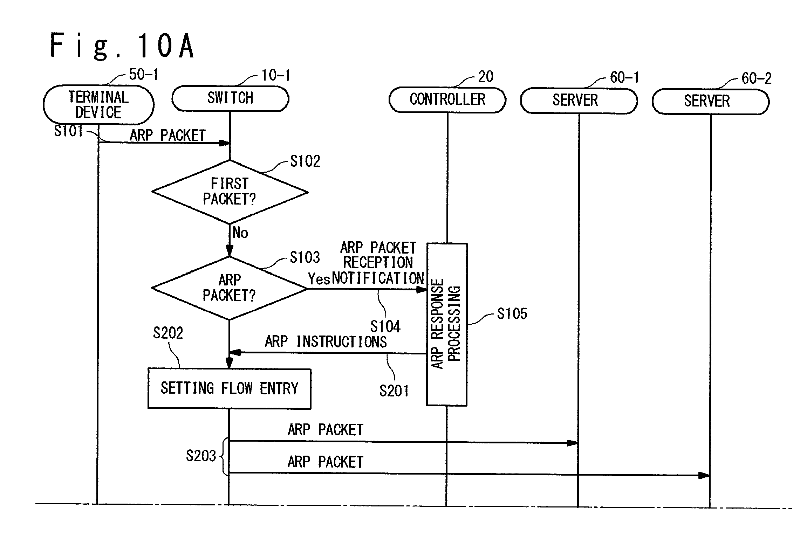

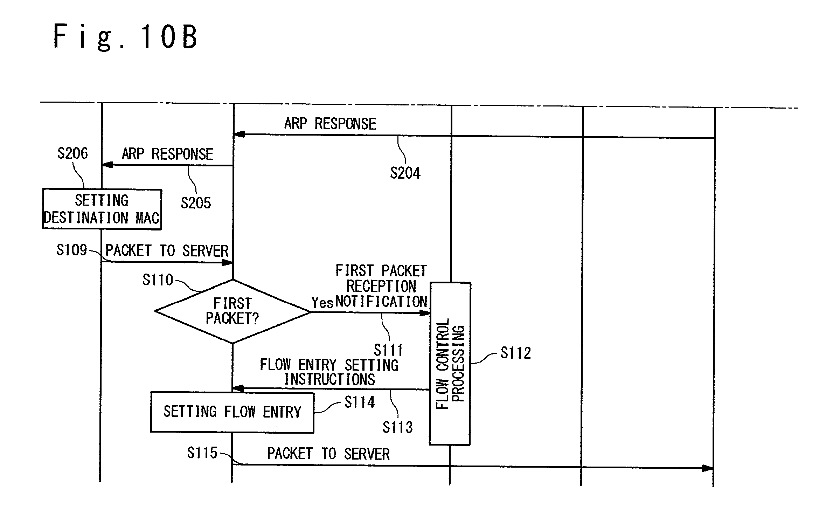

At the step S14 shown in Fig. 9, an operation in the case of not executing the proxy response to the ARP request will be described with reference to Figs. 10A and 10B. Figs. 10A and 10B are sequence diagrams showing the operation of the computer system in the case of not executing the ARP proxy response in the controller.

Similarly to the operation shown in Figs. 8A and 8B, the switch 10-1 notifies the controller 20 of an ARP request packet in which a VIP address transmitted from the terminal device 50-1 is a target address (step S101 to S104). The controller 20 executes the ARP response processing on the ARP request packet notified from the switch 10-1 (step S105).

With reference to Fig. 9, in the controller 20, the ARP response processing (step S105) in the case of not executing the proxy response to the ARP request will be described. The ARP response processing section 22 of the controller 20 judges, with reference to the target address of the notified ARP request packet, whether or not the request is the ARP request for the VIP address (step S11). Here, since the reception packet is not the ARP request packet for the VIP address (for example, the ARP request packet is the packet for the IP address), the ARP response processing section 22 judges whether or not it executes the proxy response (step S14). Here, in the case of not executing the proxy response for the ARP request (in the case that the executing of the proxy response for the ARP request terminal device is not set to the controller 20), the ARP response processing section 22 returns the ARP packet to the switch 10 of the notification source and executes an ARP instructions to make the switch 10 broadcast the ARP packet (step S16, step S201 in Fig. 10A).

With reference to Figs. 10A and 10B, in the case of not executing the proxy response for the ARP request, the controller 20 instructs the switch 10 of the notification source of the ARP request packet to broadcast the ARP request packet (step S201). Here, the controller 20 instructs the switch 10-1 to set the flow entry for broadcasting the ARP request packet and returns the notified ARP request packet. The switch 10-1 updates the flow table 12 in response to the setting instructions of the flow entry and broadcasts the received ARP response packet based on the flow entry (steps S202 and S203). Here, the ARP request packet is forwarded to the servers 60-1 and 60-2. Incidentally, the example shown in Figs. 10A and 10B, the ARP request packet is forwarded from the switch 10-1 to the servers 60-1 and 60-2. However, it goes without saying that if another switch 10 is regulated as the forwarding destination in the flow entry, the packet is forwarded to the servers 60-1 and 60-2 through the other switch 10.

At the step S203 or later, similarly to an ARP procedure by a usual terminal device, an operation for acquiring a destination MAC address is executed (steps S204 to S206). The example shown in Figs. 10A and 10B, the ARP response packet is transmitted from the server 60-2 to the terminal device 50-1 and the terminal device 50-1 sets the destination source MAC address of the ARP response packet as the MAC address of the destination IP address to the ARP table (step S204 to S206).

At the step S206 or later, similarly to the operation shown in Figs. 8A and 8B, the packet whose destination is the IP address is forwarded to the server 60-2 through the switch 10-1, the IP address being that the MAC address of the terminal device 50-1 is set as the transmission source address and the MAC address of the server 60-2 is set as the transmission source address (step S109 to S115).

### (3) Destination server switching operation

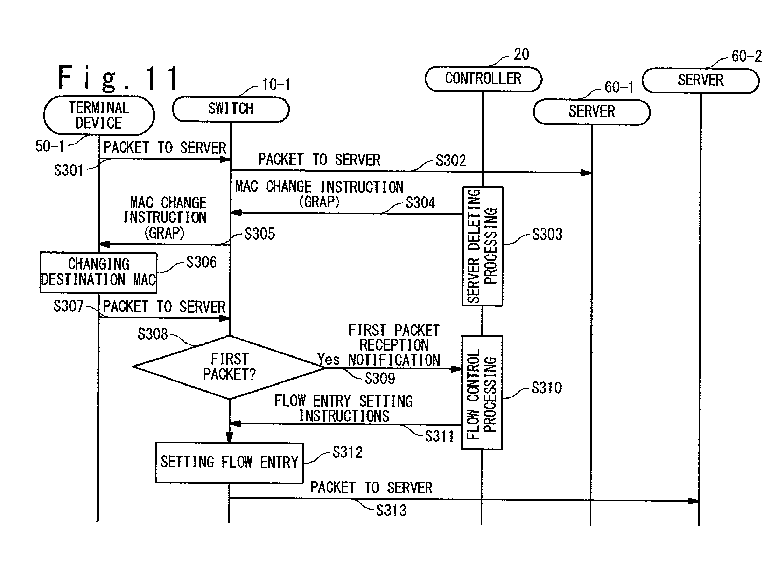

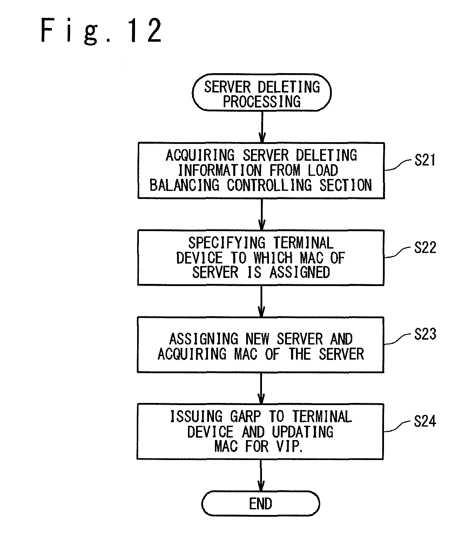

With reference to Figs. 11 and 12, a destination server switching operation of the computer system according to the computer system will be described. Here, an operation of deleting the server 60-1 which is the access destination of the terminal device 50-1 and switching the access destination to the server 60-2 will be described as an example. Fig. 11 is a sequence diagram showing an example of a destination server switching operation in the computer system according to the present invention. Fig. 12 is a flowchart showing an example of server deleting processing (destination server switching processing) in the controller 20 according to the present invention.

With reference to Fig. 11, the terminal device 50-1 is connected to the server 60-1 through the switch 10-1 (steps S301 and S302). At that time, for example, if failures occur in the server 60-1, the load information collecting device 30 instructs the controller 20 to delete the server 60-1 (not shown). The controller 20 executes server deleting processing (destination server switching processing) based on the instructions of the server deletion (step S303).

With reference to Fig. 12, the server deleting processing in the step S303 will be described in detail. When receiving the server deleting information from the load information collecting device 30, the load balancing controlling section 21 specifies the terminal device 50 to which the MAC address of the sever is assigned as the destination with reference to the assignment information table 26 (steps S21 and S22). In detail, the load balancing controlling section 21 retrieves the assignment information table 26 by using the assignment server information 263 coinciding with the host terminal ID of the deleted server and specifies the corresponding destination information 261 and the terminal device information 262 (step S23). Here, the VIP address and terminal device 50-1 are specified.

Subsequently, the ARP response processing section 22 acquires real server information (MAC address) assigned to the destination information 261 and the terminal device information 262 from the load balancing controlling section 21. In detail, with reference to the load information table 25, the load balancing controlling section 21 specifies the server (the server information 251) to which the destination information 261 (e.g. the destination VIP address) specified at the step S22 is assigned, extracts the MAC address 243 corresponding to the specified server information 251 from the host terminal information table 24, and give it to the ARP response processing section 22. At this time, when there are multiple servers to which the VIP address is assigned, the load balancing controlling section 21 determines the server to be assigned as a new access destination based on the load information 253 corresponding to each of the multiple servers (the server information 251). For example, the load balancing controlling section 21 assigns the server 60-2 whose load is smallest in the multiple servers except the server 60-1, to which the VIP address is assigned, as the access destination of the terminal device 50-1 and gives the MAC address of the server to the ARP response processing section 22. When assigning the server 60-2 as a new destination corresponding to the VIP address, the load balancing controlling section 21 records the assignment result in the assignment information table 26. At this time, the load balancing controlling section 21 records the assignment server information 263 before changing the server assignment as the old destination server information 264 and rewrites the host terminal ID of the server newly assigned to the VIP address as the assignment server information 263. For example, the load balancing controlling section 21 sets the VIP address specified at the step S22 as the destination information 261, sets the host terminal ID corresponding to the terminal device 50-1 specified at the step S22 as the terminal information 262, sets the host terminal ID of the server 60-2 assigned to the VIP address as the assignment server information 263, relates them to each other and records them in the assignment information table 26.

The ARP response processing section 22 issues a GARP (Gratuious ARP) packet to the terminal device 50 specified at the step S22, the GARP packet being the packet in which the MAC address of the server newly assigned by the load balancing controlling section 21 is set as the transmission source MAC address (step S24, step S304 in Fig. 11). Here, in the GARP packet, the MAC addresses of the terminal device 50-1 and the server 60-2 newly assigned with respect to the destination VIP address of the terminal device 50-1 are set as the transmission source MAC address. With reference to Fig. 11, the GARP packet is transmitted to the terminal device 50-1 through the switch 10-1 (steps S304 and S305).

The terminal 50-1 updates the ARP table using the transmission source MAC address of the received GARP packet as the MAC address assigned to the destination VIP address (step S306). Here, the MAC address of the server 60-2 is assigned to the destination VIP address. At the step S306 or later, similarly to the steps S109 to S115 of Figs. 10A and 10B, while setting the MAC address of the server 60-2 as the destination MAC address of the packet whose destination is the VIP address, the terminal device 50-1 executes the communication whose destination is the VIP address (steps S307 to S313).

As described above, according to the present invention, even if the destination server is deleted, the destination server switching in consideration of load can be realized by the controller 20 controlling in an integrated fashion.

### (4) Destination server switching operation while session is retained

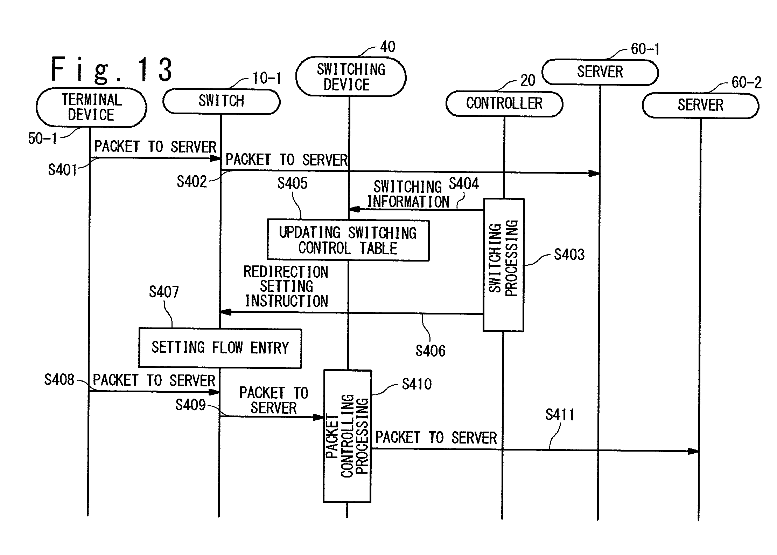

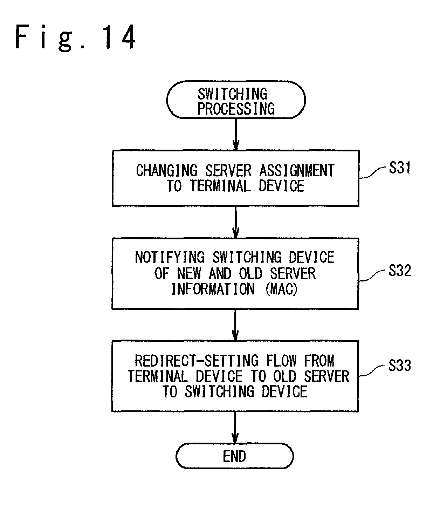

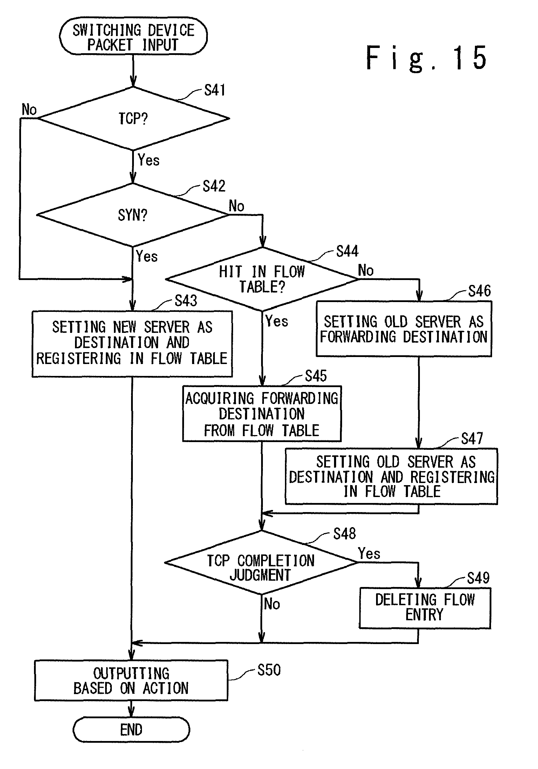

with reference to Figs. 13 to 15, a destination server switching operation while session is retained of the computer system according to the computer system will be described. Here, the case that the communication between the terminal device 50-1 and the server 60-1 is switched to communication between the terminal 50-1 to the server 60-2 will be described as an example. Fig. 13 is a sequence diagram showing an example of an operation of switching the destination server while retaining a session in the computer device according to the present invention. Fig. 14 is a flowchart showing an example of an operation of the switching processing in the controller 20 according to the present invention. Fig. 15 is a flowchart showing an example of an operation of the packet control processing in the switching device 40 according to the present invention.

With reference to Fig. 13, the terminal 50-1 is connected to the server 60-1 through the switch 10-1 (steps S401 and S402). At this time, for example, when load of the server 60-1 is increased, the controller 20 executes the switching processing for switching the communication between the terminal 50-1 and the server 60-1 to the communication between the terminal 50-1 and another server 60 whose load is small (step S403).

With reference to Fig. 14, the switching processing in the step S403 will be described in detail. With reference to the load information table 25 and the assignment information table 26, the load balancing controlling section 21 switches the server whose load is increased in the servers assigned to the destination VIP address of the terminal device to another server whose load is small (step S31). In detail, when the load of the server assigned to the destination VIP address of the terminal device exceeds a predetermined threshold or when the load of another server having the foregoing destination VIP address falls below a predetermined threshold, the load balancing controlling section 21 switches the destination server currently assigned to the VIP address to another server whose load is small. The load balancing controlling section 21 records the assignment server information 263 before server assignment switching as the old destination server information 264 and rewrites the host terminal ID of the server to be newly assigned as the destination server as the assignment server information 263. For example, the load balancing controlling section 21 sets the host terminal ID of the server 60-1 whose load exceeds the threshold as the old destination server information 264, sets the host terminal ID of the server 60-2 whose load is small as the assignment server information 263, relates them to the destination information 261 (the VIP address) and the terminal information 262 (the terminal 50-1) and records them. Incidentally, the destination server switching operation by the load balancing controlling section 21 may be executed at regular intervals or at arbitrary time (for example, the updating timing of the load information table 25 (the notifying timing of the load information from the load information collecting device 30)).

When switching the destination server, the load balancing controlling section 21 notifies the switching device 40 of the information (the MAC address) of the destination server before and after the switching as the switching information (step S32, step S404 in Fig. 13). In detail, the MAC addresses corresponding to the assignment server information 263 and the old destination server information 264 updated in the step S31, the MAC address corresponding to the terminal device information 262 related to them and the destination information 261 (the VIP address) related to them are transmitted to the switching device 40 as the switching information. Here, relation information between the MAC address of the server 60-1 before the switching is executed and the MAC address of the server 60-2 after the switching is executed, which are assigned to the traffic from the terminal 50-1 to the VIP address as the destination, is transmitted to the switching device 40 as the switching information.

With reference to Fig. 13, the switching controlling section 44 of the switching device 40 records the transmitted switching information in the switching information table 45 (step S405). Here, the destination information 261 (the VIP address), the MAC address corresponding to the terminal device information 262, the MAC address corresponding to the assignment server information 263 and the MAC address 243 corresponding to the old destination server information 264 included in the switching information are recorded as the destination information 451, the terminal information 452, the new destination server information 453 and the old destination server information 454, respectively, in the switching information table 45.

When notifying the switching device 40 of the switching information, the controller 20 instructs the switches 10 on the communication route to set (change) the flow entry such that the communication route to the server 60 before the switching is executed is redirected to the switching device 40 (redirection setting instructions, step S406, step S33 in Fig. 14). In detail, on the communication route between the terminal device 50 as the target of the redirect setting and the server 60 before the switching is executed, the switch controlling section 23 of the controller 20 changes the flow entry of the switch 10 adjacent to the terminal device 50. Here, the switch controlling section 23 instructs the switch 10-1 adjacent to the terminal device 50-1 to change the flow entry.

Based on the instructions for setting the flow entry, the switch 10-1 sets the foregoing flow entry to the own flow table 12 (step S407). Here, the flow entry regulating that "forwarding the packet in which the MAC address of the terminal device 50-1 is set as the transmission source MAC address and the MAC address of the server 60-1 is set as the destination MAC address to the switching device 40" is set.

At the step S407 or later, the packet to the VIP address, in which the MAC address of the terminal device 50-1 is set as the transmission source MAC address and the MAC address of the server 60-1 is set as the transmission source MAC address, is forwarded to the server 60-1 through the switch 10-1 (steps S408 and S409). In detail, the terminal device 50-1 transmits the packet to the VIP address in which the destination is the MAC address of the server 60-1 (step S408). The switch 10-1 forwards the reception packet to the switching device 40 according to the flow entry (step S409. Consequently, the redirection of the traffic from the terminal device 50-1 to the destination MAC address of the server 60-1 can be realized.

When receiving the packet, the switching device 40 analyzes the reception packet by the packet controlling processing and executes the changing of the flow entry or the processing according to the flow entry based on the analysis result (step S410).

With reference to Fig. 15, an example of the packet controlling processing in the step S413 will be described. In the switching device 40, in consideration of the session of the TCP, from the new TCP connection, the destination server is sequentially switched to the switched server. The method of switching the destination server is realized by changing the destination MAC address of the packet into the MAC address of the switched server in the switching device 40.

First, the switching device 40 judges whether or not the reception packet is the TCP packet (step S41). When the reception packet is not a TCP packet, since there is no connection concept, the switch processing section 41 sets the server 60 corresponding to the new destination server information 453 as the destination of the reception packet and registers the flow entry regulating that "converting the destination MAC address of the reception packet into the MAC address of the server 60 and forwarding it" in the flow table 42 (steps S41: No and S43). In detail, at the step S43, the switch controlling section 43 specifies the new destination server information 453 corresponding to the transmission source MAC address and the destination VIP address of the reception packet. Next, the switch controlling section 43 registers a flow entry in the flow table 42, the flow entry being that the rule is the transmission source MAC address and the destination VIP address of the reception packet and the action is of converting the destination MAC address of the packet into the specified new destination server information 453 (the MAC address) and forwarding the packet.

On the other hand, at the step S41, when the reception packet is a TCP packet, the switching device 40 confirms the SYN flag bit of the reception packet (steps S41: Yes and S42). Here, when the reception packet is a SYN packet, since the foregoing packet represents a new connection of the TCP, the procedure proceeds to the step S43 and the destination is changed into the new server (the new destination server information 453) for the this connection (step S42: Yes).

At the step S43, when the flow table 42 is changed, the switch processing section 41 executes the action regulated in the changed flow table (step S50). Here, the switch processing section 41 converts the destination MAC address of the reception packet into the MAC address (the new destination server information 453) of the server newly assigned by the controller 20 and forwards the packet.

On the other hand, when the reception packet is not the SYN packet and does not meet the TCP completion judgment condition, the switch processing section 41 forwards the reception packet based on the action regulated in the flow entry complying with the reception packet (steps S42: No, S44: Yes, S45, S48: No and S50). Here, meeting the TCP completion judgment condition is, for example, the case that a FIN packet and FIN-ACK packet are transmitted interactively.

However, when the flow entry complying with the reception packet which is not the SYN packet is not set in the flow table 42, the switch processing section 41 registers a flow entry in the flow table 42, the flow entry regulating that the server corresponding to the old destination server information 454 is set as the destination of the reception packet and the destination MAC address of the reception packet is converted into the MAC address of the foregoing server and the packet is forwarded (steps S42: No, S44: No, S46 and S47). In detail, the switching controlling section 43 specifies the old destination server information 454 corresponding to the transmission source MAC address and the destination VIP address of the reception packet from the switching information table 45. Next, the switch controlling section 43 registers a flow entry in the flow table 42, the flow entry being that the rule is the transmission source MAC address and the destination VIP address of the reception packet and the action is of converting the destination MAC address of the packet into the specified old destination server information 454 (the MAC address) and forwarding the packet. After the flow entry is registered, when the reception packet does not meet the TCP completion judgment condition, the switch processing section 41 forwards the reception packet based on the action regulated in the flow entry registered at the step S47 (step S50).

In addition, when the reception packet is the TCP packet and meets the TCP completion judgment condition such as the case that the FIN packet and FIN-ACK packet are transmitted interactively, since the connection is closed, the entry of the flow table is explicitly deleted (here, only a deletion declaration is explicitly preformed, and the actual deletion will be preformed after executing the action) (steps S48: Yes and S49).

As described above, the switching device 40 judges whether the destination server of the reception packet is the old server or the new server after switching and forwards the reception packet to the destination according to the flow entry based on the judgment result. In the present invention, by the switching device 40 changing the destination MAC address of the packet forwarded from the terminal device 50, the destination server can be changed into another server while the session is retained. The example shown in Fig. 14, according to the flow entry set based on the reception packet or the flow entry complying with the reception packet, the switching device 40 converts the packet to the MAC address of the server 60-1 from the terminal device 50-1 into the packet to the MAC address of the server 60-2 and forwards the packet (steps S410 and S411). In the present invention, the access destination server of the terminal device 50 can be changed while the connection which is in service is retained without making the switch 10 have the MAC address conversion function (processing of the session layer). Therefore, the Layer 2 switch can be used as the switch 10. Thus, according to the present invention, the server load balancing processing can be achieved while increase of costs is suppressed in the high-speed network environment. In addition, since the proxy ARP function is executed by the controller 20 independently from the switch 10, the load balancing can be achieved without depending on the scale of the switch network. Consequently, the server load balancing processing with high scalability can be achieved without using an expensive network device.

Furthermore, at the step S403, the controller 20 may determine whether or not the switching device is used when the assignment of the destination server is changed based on the protocol of the communication between the terminal device and the server. For example, when the communication between the terminal device and the server is the TCP communication, when the server assignment is changed, the packet is made to pass through the switching device 40 and the server assignment is gradually changed while the session is not disconnected. On the other hand, when the communication is the HTTP communication, the server assignment is changed without the packet passing through the switching device 40 and the interruption of the session is allowed. Or, when the communication of the HTTP protocol is for the specific important application, the controller 20 may control the packet to pass through the switching device not to interrupt the service. In addition, by determining whether or not the packet is made to branch to the switching device based on the transmission source IP address, the controller can set whether or not the session is retained when the server assignment is changed, in units of not only protocol but also user.

### (5) Switching completion operation according to deletion of flow entry.

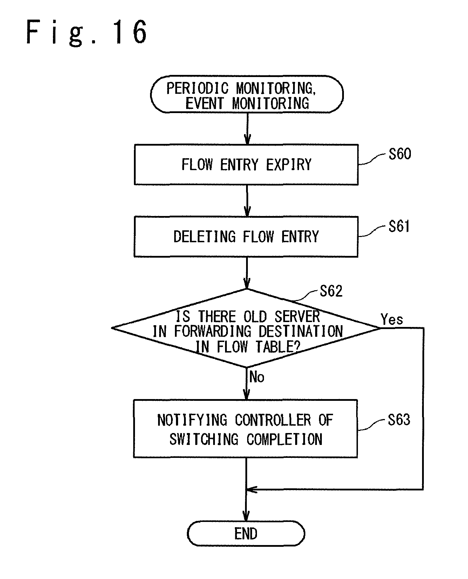

Fig. 16 is a flowchart showing a switching operation based on expiring of the flow entry in the switching device 40 according to the present invention. With reference to Fig. 16, the switching operation based on expiring of the flow entry in the switching device 40 according to the present invention will be described. Here, the flow entry registered in the flow table 42 of the switching device 40 is deleted from the flow table 42 after predetermined time passes or when a predetermined condition is satisfied. The operation of the switching device 40 in this case will be described.

When the flow entry is expired because the completion condition of the TCP connection is satisfied or the time out arises, the switching controlling section 44 confirms whether a flow entry is present in the flow entries recorded in the flow table 42, the flow entry being that the MAC address (the old destination server information 454) of the server before switching is set as the destination MAC address (steps S60, S61 and S62). Here, when the flow entry that the old destination server information 454 is set as the destination MAC address is present in the flow table 42, the switching controlling section 44 waits ready until the expiring of new flow entry arises (step S62: Yes). On the other hand, when the flow entry that the old destination server information 454 is set as the destination MAC address is not present, the switching controlling section 44 notifies the controller 20 of the completion of the switching processing (steps S62: Yes and S63). For example, the switching controlling section 44 counts the flow entries that the old destination server information 454 is set as the destination MAC address every time when deleting the flow entry. At the time when the count value is zero (0) or when certain time passes from the switching processing, the switching control section 44 completes the switching, and notifies the controller of the completion.

When receiving the switching completion notification, the controller 20 notifies the terminal device 50 of the physical server (the MAC address) corresponding to the VIP address by using the GARP packet similarly to Figs. 11 and 12 (not shown). For example, in response to the switching completion notification, the controller 20 notifies the terminal device 50-1 that the server 60-2 (of the MAC address) is set as the physical server corresponding to the VIP address by using the GARP packet. The terminal device 50-1 sets the MAC address of the server 60-2 as the ARP cache entry corresponding to the VIP address entry, and outputs subsequent communication to the VIP address to the MAC address of the server 60-2. Furthermore, the controller 20 deletes the flow entry for the route redirecting from the terminal device 50-1 to the switching device 40 and releases the resource of the switching device (not shown).

As described above, according the present invention, the access destination server can be changed without executing header conversion in the switch. Therefore, the load balancing system can be established by using the low cost and high speed L2 switches. Furthermore, in the present invention, the setting of the flow and the changing of the access destination server is realized by using the OpenFlow network based on the server load and the server deletion. Therefore, the server loadbalancingprocessing with high scalability can be achieved.

While the exemplary embodiments of the present invention has been described in detail, the present invention is not limited to the above exemplary embodiments, but may be modified and changed without departing from the scope and spirit of the present invention. For example, it goes without saying that the number of switches 10, the number of terminal devices 50, the number of switching devices 40 and the number of servers 60 are not limited to the above example. In addition, a plurality of the computer systems according to the present invention may be provided and routing (load balancing control) may be executed among the plurality of computer systems by the cooperation among respective controllers 20. Moreover, in the example mentioned above, the destination server is changed based on the server load and the application load. However, the present invention is not limited to these. The destination server may be arbitrarily changed based on the network load (congestion state) and the setting by a vendor application load. For example, at the maintenance time of the server, the destination server is changed. In addition, the switching device 40 may be realized by a device other than the controller 20 or a device same as the controller 20. When the switching device 40 is realized by the device same as the controller 20, the function (the packet relay function) of the switch 10 is also applied. That is, the switch 40 can be realized by combining the controller 20 and the switch 10.

The whole or part of the exemplary embodiments disclosed above can be described as, but not limited to, the following supplementary notes.

### (Supplementary note 1)

A computer system including:
a controller; and
a switch configured to perform, on a reception packet complying with a flow entry set by the controller, a relay operation regulated by the flow entry,
wherein the controller:
   notifies, by executing a proxy response to an ARP request packet from a terminal device, the terminal device of a MAC (Media Access Control) address of a physical server which is an access destination of the terminal device, and
   sets a flow entry to the switch, the flow entry regulating that a reception packet, which is transmitted from the terminal device and in which the MAC address is set as a destination MAC address, is made to be forwarded to a communication route to the physical server.

### (Supplementary note 2)

The computer system according to Supplementary note 1, wherein the controller selects, with reference to a table in which a VIP (Virtual Internet Protocol) address and a physical server are related and recorded, a physical server which corresponds to a target VIP address included in the ARP request packet as a physical server which is an access destination of the terminal device, and transmits a MAC address of the physical server to the terminal device as a transmission source MAC address of an ARP response packet.

### (Supplementary note 3)

The computer system according to Supplementary note 1 or 2, wherein the controller selects the MAC address of the physical server which is the access destination of the terminal device based on each load on each of the servers.

### (Supplementary note 4)

The computer system according to any of Supplementary notes 1 to 3, wherein the controller transmits a GARP packet, in which a MAC address of another physical server different from the physical server is set as a transmission source MAC address, to the terminal device to change a destination MAC address set in an ARP table of the terminal device from the MAC address of the physical server into the MAC address of the other physical server.

### (Supplementary note 5)

The computer system according to any of Supplementary notes 1 to 4, wherein when a reception packet is an ARP request packet, according to a flow entry set by the controller, the switch notifies the controller of the ARP request packet.

### (Supplementary note 6)

A computer system including:
a controller;
a switch configured to perform, on a reception packet complying with a flow entry set by the controller, a relay operation regulated by the flow entry; and
a switching device,
wherein the switch forwards, based on a first flow entry set by the controller, a packet in which a first MAC address of a first server is set as a destination MAC address to a communication route to the first server,
wherein the controller sets a second flow entry to the switch by replacing the first flow entry, the second flow entry regulating that a packet, in which a first MAC address of the first server is set as a destination MAC address, is made to be forwarded to the switching device,
wherein the switch forwards, based on the second flow entry, the packet in which the first MAC address is set as the destination MAC address to the switching device, and
wherein the switching device changes the destination MAC address of the reception packet from the switch from the first MAC address into a second MAC address of a second server different from the first server and forwards it to a communication route to the second server.

### (Supplementary note 7)

The computer system according to Supplementary note 6, wherein the switching device changes, when the reception packet is a TCP (Transmission Control Protocol) packet and a flow entry complying the reception packet is not set in an own flow table, the destination MAC address of the reception packet from the switch into the first MAC address and forwards it to a communication route to the first server.

### (Supplementary note 8)

The computer system according to Supplementary note 6 or 7, wherein the switching device executes TCP completion judgment based on a reception packet, and when the switching device judges that TCP connection is completed, after the switching device forwards the reception packet to a destination according to a flow entry which complies with the reception packet and is set in an own flow table, the switching device deletes the flow entry from the flow table.

### (Supplementary note 9)

The computer system according to any of Supplementary notes 6 to 8, wherein the switching device notifies the controller of switching completion after deleting a flow entry from an own flow table, and
wherein the controller deletes the second flow entry from the switch based on the switching completion.

### (Supplementary note 10)

The computer system according to any of Supplementary notes 6 to 9, wherein the controller selects a second MAC address of the second server to be an access destination of the terminal device based on load of each of a plurality of server and notifies the switching device.

### (Supplementary note 11)

A controller used for the computer system according to any of Supplementary notes 1 to 10.

### (Supplementary note 12)

A switching device used for the computer system according to any of Supplementary notes 6 to 10.

### (Supplementary note 13)

A communication control program, when executed by a computer, realizing the controller according to Supplementary note 11.

### (Supplementary note 14)

A communication control program, when executed by a computer, realizing the switching device according to Supplementary note 12.

### (Supplementary note 15)

A communication method which is executed by a computer system, the computer system including: a switch configured to perform, on a reception packet complying with a flow entry set by a controller, a relay operation regulated by the flow entry,
the communication method including:
the controller notifying, by executing a proxy response to an ARP request packet from a terminal device, the terminal device of a MAC (Media Access Control) address of a physical server which is an access destination of the terminal device, and
the controller setting a flow entry to the switch, the flow entry regulating that a reception packet, which is transmitted from the terminal device and in which the MAC address is set as a destination MAC address, is made to be forwarded to a communication route to the physical server.

### (Supplementary note 16)

The communication method according to Supplementary note 15, further including:
the controller selecting, with reference to a table in which a VIP (Virtual Internet Protocol) address and a physical server are related and recorded, a physical server which corresponds to a target VIP address included in the ARP request packet as a physical server which is an access destination of the terminal device,
wherein the step of notifying the MAC address, includes:
   the controller transmitting a MAC address of the physical server to the terminal device as a transmission source MAC address of an ARP response packet.

### (Supplementary note 17)

The communication method according to Supplementary note 15 or 16, further including:
the controller selecting the MAC address of the physical server which is the access destination of the terminal device based on each load on each of the servers.

### (Supplementary note 18)

The communication method according to any of Supplementary notes 15 to 17, further including:
the controller transmitting a GARP packet, in which a MAC address of another physical server different from the physical server is set as a transmission source MAC address, to the terminal device to change a destination MAC address set in an ARP table of the terminal device from the MAC address of the physical server into the MAC address of the other physical server.

### (Supplementary note 19)

The communication method according to any of Supplementary notes 15 to 18, further including:
the switch notifying, when a reception packet is an ARP request packet, according to a flow entry set by the controller, the controller of the ARP request packet.

### (Supplementary note 20)

A communication method which is executed by a computer system, the computer system including: a switch configured to perform, on a reception packet complying with a flow entry set by a controller, a relay operation regulated by the flow entry,
the communication method including:
the switch forwarding, based on a first flow entry set by the controller, a packet in which a first MAC address of a first server is set as a destination MAC address to a communication route to the first server;
the controller setting a second flow entry to the switch by replacing the first flow entry, the second flow entry regulating that a packet, in which a first MAC address of the first server is set as a destination MAC address, is made to be forwarded to the switching device;
the switch forwarding, based on the second flow entry, the packet in which the first MAC address is set as the destination MAC address to the switching device; and
the switching device changing the destination MAC address of the reception packet from the switch from the first MAC address into a second MAC address of a second server different from the first server and forwarding it to a communication route to the second server.

### (Supplementary note 21)

The communication method according to Supplementary note 20, further including:
the switching device changing, when the reception packet is a TCP (Transmission Control Protocol) packet and a flow entry complying the reception packet is not set in an own flow table, the destination MAC address of the reception packet from the switch into the first MAC address and forwards it to a communication route to the first server.

### (Supplementary note 22)

The communication method according to Supplementary note 20 or 21, further including:
the switching device judging that TCP connection is completed based on a reception packet, and
the switching device deletes, after forwarding the reception packet to a destination according to a flow entry which complies with the reception packet, the flow entry from the flow table.

### (Supplementary note 23)

The communication method according to any of Supplementary note 20 or 22, further including:
the switching device notifying the controller of switching completion after deleting a flow entry from an own flow table, and
the controller deleting the second flow entry from the switch based on the switching completion.

### (Supplementary note 24)

The communication method according to any of Supplementary note 20 or 23, further including:
the controller selecting a second MAC address of the second server to be an access destination of the terminal device based on load of each of a plurality of server and notifying the switching device.

This application is based upon and claims the benefit of priority from Japanese patent application No. 2011-80955, the disclosure of Japanese patent application No. 2011-80955 is incorporated herein in its entirety by reference.

## Claims

1. A computer system comprising:
a controller; and
a switch configured to perform, on a reception packet complying with a flow entry set by the controller, a relay operation regulated by the flow entry,
wherein the controller:
selects, with reference to a table in which a VIP (Virtual Internet Protocol) address and a physical server are related and recorded, a physical server which corresponds to a target VIP address included in an ARP request packet from a terminal device as a physical server which is an access destination of the terminal device, and
notifies, by executes a proxy response to the ARP request packet by using an ARP response packet in which a MAC (Media Access Control) address of the physical server is set as a transmission source MAC address, the terminal device of the MAC address of the physical server which is the access destination of the terminal device,
sets a flow entry to the switch, the flow entry regulating that a reception packet, which is transmitted from the terminal device and in which the MAC address is set as a destination MAC address, is made to be forwarded to a communication route to the physical server.

2. The computer system according to claim 1, wherein the controller selects the MAC address of the physical server which is the access destination of the terminal device based on each load on each of the servers.

3. The computer system according to claim 1 or 2, wherein the controller transmits a GARP packet, in which a MAC address of another physical server different from the physical server is set as a transmission source MAC address, to the terminal device to change a destination MAC address set in an ARP table of the terminal device from the MAC address of the physical server into the MAC address of the other physical server.

4. A computer system comprising:
a controller;
a switch configured to perform, on a reception packet complying with a flow entry set by the controller, a relay operation regulated by the flow entry; and
a switching device,
wherein the switch forwards, based on a first flow entry set by the controller, a packet in which a first MAC address of a first server is set as a destination MAC address to a communication route to the first server,
wherein the controller sets a second flow entry to the switch by replacing the first flow entry, the second flow entry regulating that a packet, in which a first MAC address of the first server is set as a destination MAC address, is made to be forwarded to the switching device,
wherein the switch forwards, based on the second flow entry, the packet in which the first MAC address is set as the destination MAC address to the switching device,
wherein the switching device changes the destination MAC address of the reception packet from the switch from the first MAC address into a second MAC address of a second server different from the first server and forwards it to a communication route to the second server.

5. A controller used for the computer system according to any of claims 1 to4.

6. A switching device used for the computer system according to claim 3.

7. A recording medium storing a communication control program, when executed by a computer, realizing the controller according to claim 5.

8. A recording medium storing a communication control program, when executed by a computer, realizing the switching device according to claim 6.

9. A communication method which is executed by a computer system, the computer system including: a switch configured to perform, on a reception packet complying with a flow entry set by a controller, a relay operation regulated by the flow entry,
the communication method comprising:
the controller selecting, with reference to a table in which a VIP (Virtual Internet Protocol) address and a physical server are related and recorded, a physical server which corresponds to a target VIP address included in an ARP request packet from a terminal device as a physical server which is an access destination of the terminal device;
the controller notifying, by executing a proxy response to the ARP request packet by using an ARP response packet in which a MAC (Media Access Control) address of the physical server is set as a transmission source MAC address, the terminal device of the MAC address of the physical server which is the access destination of the terminal device; and
the controller setting a flow entry to the switch, the flow entry regulating that a reception packet, which is transmitted from the terminal device and in which the MAC address is set as a destination MAC address, is made to be forwarded to a communication route to the physical server.

10. A communication method which is executed by a computer system, the computer system including: a switch configured to perform, on a reception packet complying with a flow entry set by a controller, a relay operation regulated by the flow entry,
the communication method comprising:
the switch forwarding, based on a first flow entry set by the controller, a packet in which a first MAC address of a first server is set as a destination MAC address to a communication route to the first server;
the controller setting a second flow entry to the switch by replacing the first flow entry, the second flow entry regulating that a packet, in which a first MAC address of the first server is set as a destination MAC address, is made to be forwarded to the switching device;
the switch forwarding, based on the second flow entry, the packet in which the first MAC address is set as the destination MAC address to the switching device; and
the switching device changing the destination MAC address of the reception packet from the switch from the first MAC address into a second MAC address of a second server different from the first server and forwarding it to a communication route to the second server.
